# EUROPEAN PATENT APPLICATION

(11) **EP 2 741 436 A1**
(43) Date of publication of application: **11.06.2014**
(21) Application number: 12196366.4
(22) Date of filing: 10.12.2012
(51) Int. Cl.: H04B 17/00

(54) **Method and apparatus for improved wireless reception.**

(71) Applicant: NXP B.V., 5656 AG Eindhoven (NL)
(72) Inventor: Lawrow, Ivan, Redhill, Surrey RH1 1SH (GB)
(74) Representative: Miles, John Richard

(57) **Abstract**

Wireless networks with multiple transmitters and receivers may have reduced quality of service due to signal collisions from simultaneous or overlapping transmissions. An RF receiver comprises a power detector 14 for providing a plurality of received signal strength indication values 16 of a received RF signal, a demodulator 18 for demodulating and decoding the received RF signal, a restart module 26 coupled to the power detector and the demodulator for generating a restart event; wherein the restart module is operable to receive received signal strength indication values from the power detector during demodulation of the received RF signal from a first transmitter and to generate a restart event to restart the demodulator to demodulate and decode the received RF signal from a further transmitter in response to an increase of the received signal strength by a value which exceeds a predetermined threshold value. This can reduce the data loss for overlapping transmissions where the second transmission is higher power than the first transmission.

## Description

This invention relates to radio frequency (RF) receivers for use in wireless networks.

RF receivers may be incorporated together with RF transmitters to form wireless networks with many such devices. Devices configured to operate together in a network can be used in building automation for example to control lighting or heating systems in domestic or commercial buildings.

These devices can be configured, for example, as a node in an IEEE802.15.4 or Zigbee personal area network. Such a device typically contains a microprocessor and radio transmitter/receiver together with various peripherals and memory. These may be integrated into a single semiconductor device. An IEEE 802.15.4 based lighting network will typically have light switches incorporating IEEE802.15.4 end devices, whereas the light fitments incorporate IEEE802.15.4 router nodes which both control their own light and operate as routers, routing messages to other nodes.

Such networks may consist of large numbers of transmitters and receivers operating on the same frequency channel and transmit packetized data of variable duration. Signal collisions between two or more transmitters which transmit data at the same time may result in corruption of the received data. If the receiver identifies the data corruption through error detection, then this requires retransmission of the data from one or more than one of the transmitter. If the receiver does not identify the resulting data corruption then the transmitted data is lost. This can degrade the quality of service of the wireless network. Some wireless networks including IEEE 802.15.4 implement a carrier sense multiple access with collision avoidance algorithm (CSMA-CA) to reduce on-air collisions whereby a node first listens and waits for a clear channel before transmitting. This may work in some cases but not all. For example, transmitters may be located too far apart from each other to be able to detect the other's in-progress transmission, so CSMA-CA will not work effectively in this scenario. There is therefore a need for an improved RF receiver.

Various aspects of the invention are defined in the accompanying claims. In a first aspect there is defined a radio frequency receiver comprising a power detector for providing a plurality of received signal strength indication values of a received RF signal, a demodulator for demodulating and decoding the received RF signal, a restart module coupled to the power detector and the demodulator for generating a restart event; wherein the restart module is operable to receive received signal strength indication values from the power detector during demodulation of the received RF signal from a first transmitter and to generate a restart event to restart the demodulator to demodulate and decode the received RF signal from a further transmitter in response to an increase of the received signal strength by a value which exceeds a predetermined threshold value.

The failure to acquire and decode a radio transmission can occur when during in progress reception of a first radio transmission a further stronger radio transmission is received. This may occur for example when an earlier distant radio transmission and a later nearby radio transmission overlap in time (or collide) as observed by a receiver. By restarting the signal acquisition process, the receiver can correctly receive and decode the later, stronger transmission.

In embodiments, the demodulator is operable to restart signal acquisition in response to a restart event generated by the restart module.

In embodiments, the demodulator further comprises a data output for the decoded data and a decoding status output for indicating when the demodulator is decoding a data packet and wherein the decoding status output is coupled to an input of the restart module and the restart module is operable to generate a restart event only when the decoder is decoding a data packet.

By generating the restart event only during decoding, the number of unnecessary restarts can be reduced.

In embodiments, the restart module further comprises a threshold input and the radio frequency receiver further comprises a controller coupled to the threshold input and wherein the controller is operable to provide a predetermined threshold value to the restart module.

In embodiments, the controller further comprises an RSSI input coupled to the output of the power detector and wherein the controller is operable to adapt the predetermined threshold value in response to the received signal strength indication values.

In embodiments of the RF receiver, the controller further comprises a restart input coupled to a restart output of the restart module and wherein the controller is operable to reset the system logic in response to a restart event.

In embodiments of the RF receiver, the controller further comprises an RSSI input coupled to the output of the power detector and wherein the controller is operable to adapt the predetermined threshold value in response to the received signal strength indication values.

In embodiments of the RF receiver, the restart logic is operable to receive a first RSSI value at a first time (T1S) and a further higher RSSI value at a second time (T2S) and wherein the restart logic is operable to generate a restart event in response to the difference between the further RSSi value and the first RSSI value exceeding a predetermined threshold.

The radio frequency receiver may have a predetermined threshold value corresponding to a received signal strength increase in the range of 3dB to 12dB. The predetermined threshold value may be programmable in 1dB steps.

Embodiments of the RF receiver may operate in accordance with the IEEE 802.15 or Zigbee standard.

In an embodiment there is defined a wireless network comprising a first transmitter, a further transmitter and the RF receiver of wherein the first transmitter and the second transmitter transmit RF signals at the same frequency.

The RF receiver may be included in a microcontroller.

The RF receiver may be used to form wireless networks which can for example control lighting networks or other building automation systems.

In a further aspect there is defined a method of receiving a radio frequency signal, the method comprising the steps of determining a first received strength signal indication value, determining a further received strength signal indication value during demodulation of a received RF signal from a first transmitter, and restarting the demodulator to demodulate a received RF signal from a further transmitter in response to the difference between the further received strength signal indication value and the first received strength signal indication value exceeding a predetermined threshold value.

Embodiments of the invention are now described in detail, by way of example only, illustrated by the accompanying drawings in which:
Figure 1 Shows a known RF receiver.
Figure 2 Illustrates a wireless network including the RF receiver of Figure 1.
Figure 3 Illustrates an example behaviour of the wireless network of Figure 2.
Figure 4 Shows an RF receiver according to an embodiment.
Figure 5 Illustrates a wireless network including an RF receiver of Figure 4 according to an embodiment.
Figure 6 Illustrates an example behaviour of the wireless network of Figure 5 according to an embodiment.
Figure 7 Shows an RF receiver including a controller according to an embodiment.
Figure 8 Illustrates a method of acquiring an RF signal according to an embodiment.

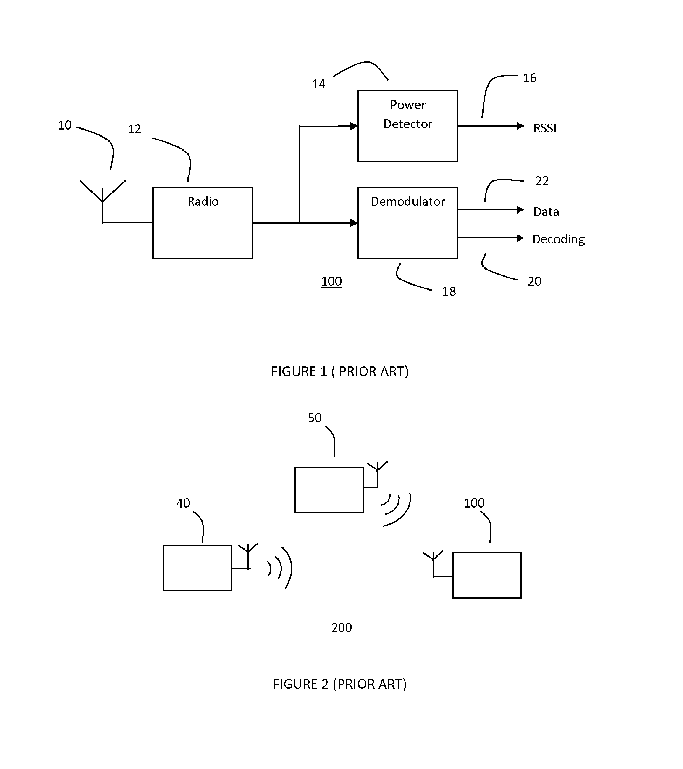

Figure 1 shows a known RF receiver 100. An antenna 10 is connected to a radio 12. The radio 12 typically converts a received RF signal to a lower intermediate or baseband frequency. The output of radio 12 is connected to a power detector 14, and a demodulator 18. The power detector 14 periodically measures the signal power and provides a received strength signal indication (RSSI) 16 to an external system. The demodulator 18 may decode and outputs the received baseband signal as binary digits or symbols on data output 22. The demodulator 18 may output a signal on decoding output 20 to indicate when it is actively decoding and when the decoded data output on data output 22 is valid.

Figure 2 shows a wireless network 200 including a first transmitter 40, a further transmitter 50 and the receiver 100. The first transmitter 40 and second transmitter 50 may be identical or different. The first transmitter 40 may be further away from the receiver 100 than the second transmitter 50.

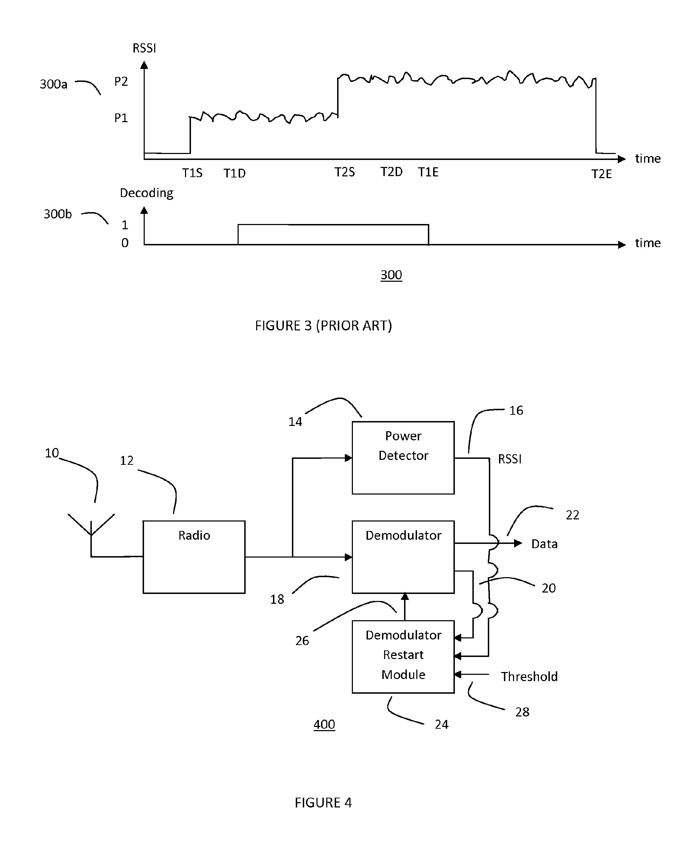

Figure 3 shows graphs 300 which demonstrate a potential problem with the wireless network 200. shown in figure 1. Graph 300a shows the behaviour of the RSSI output 16 in the RF receiver 100 over time and graph 300b shows decoding status output 20 over time. At time T1S a signal transmission is received by RF receiver 100 from the first wireless transmitter 40 and the signal energy is detected at the receiver 100 by the power detector 14 producing an RSSI level of P1 at RSSI output 16. The RSSI level may vary slightly over time due to the signal fading propagation phenomena of the transmission media.

At time T1D, the signal acquisition process is completed and the decoding status 20 is asserted which can be a change in logic value from logic 0 to logic 1, to indicate that the demodulator output data 22 is valid. The maximum time available to acquire the signal is usually defined by the duration of the preamble at the start of each packet transmission which precedes the payload data that is subsequently output by the demodulator 18. The length of the packet is usually contained near the start of the transmission and is extracted by the demodulator 18 during the signal acquisition process or shortly after decoding commences. Some wireless systems may use a fixed packet length, so the packet length may not be transmitted, since a packet length will already be presumed at the receiver.

At time T2S, a signal transmission from a second wireless device 50 on the same frequency channel may be received by RF receiver 100 and the RSSI level increases to P2. The received signal power of the second transmission is sufficiently greater than the received power of the first transmission such that the first transmitted packet observed by the receiver suffers corruption resulting in decoded data errors.

At time T2D the preamble duration completes for the second transmission.

At time T1E, the demodulator 18 completes the decoding based upon the known packet length. The first packet from the first wireless transmitter 40 may be received with errors due to the signal collision between the first and second transmissions. After time T1E, the demodulator 18 automatically restarts its signal acquisition process but, because the time T2D for acquiring the second transmission from the second wireless transmitter 50 has already passed, the second transmitted packet may not be successfully acquired or fully decoded. The result of the signal collision is that both transmitted packets fail to be correctly received by RF receiver 100.

Figure 4 shows an RF receiver 400 according to an embodiment. An antenna 10 may be connected to a radio 12. The radio 12 may convert a received RF signal to a lower intermediate or baseband frequency. The output of radio 12 may be connected to a power detector 14, and a demodulator 18. During operation, the power detector 14 may periodically measures the signal power and provides a received strength signal indication 16 to demodulator restart module 24. The demodulator 18 may decode and output the received baseband signal as binary digits or symbols on data output 22. The demodulator 18 may output a signal on decoding output status 20 to indicate when it is actively decoding and when the decoded data output on data output 22 is valid. The decoding output status 20 is connected to demodulator restart module 24. The demodulator restart module 24 has a threshold input 28. The demodulator restart module output 26 may be connected to demodulator 18.

During operation of the RF receiver 400, the demodulator restart module 24 may monitor the RSSI output 16 when decoding is active as indicated by decoding output status 20. If the increase in RSSI relative to a previous RSSI level exceeds a predetermined threshold value on threshold input 28, demodulator restart module 24 may generate a restart signal on demodulator restart module output 26. The restart signal causes the in progress decoding process to be aborted and the signal acquisition and decoding process to restart in the demodulator 18.

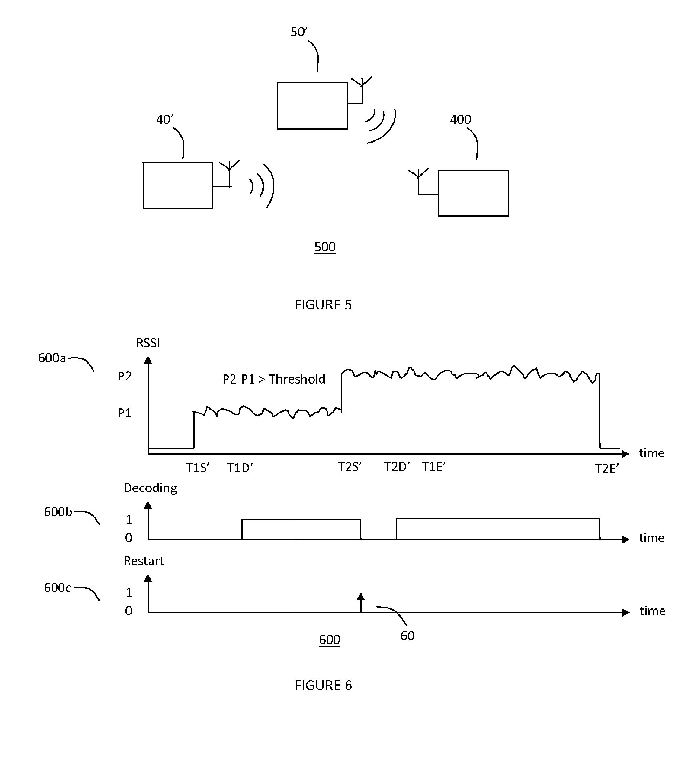

Figure 5 shows a wireless network 500 including a first transmitter 40', a further transmitter 50' and the receiver 400. The first transmitter 40' and second transmitter 50' may be identical or different. The first transmitter 40' may be further away from the receiver 400 than the second transmitter 50'.

Figure 6 shows graphs 600 showing an example behaviour of receiver 300 in wireless network 500. Graph 600a shows RSSI output 16 over time 600b showing decoding status 20 over time and 600c showing demodulator restart module output 26 over time. At time T1S' a signal transmission is observed from a first wireless transmitter 40' and the signal energy is detected at the receiver by the power detector 14 producing an RSSI level of P1.

At time T1D', the signal acquisition process is completed and the decoding status 20 is asserted to indicate that the demodulator output data 22 is valid.

At time T2S', a signal transmission from another wireless device on the same frequency channel is received by RF receiver 400 and the RSSI level increases to a further value P2. The received signal power of the second transmission may be sufficiently greater than the received power of the first transmission such that the first transmitted packet observed by the receiver suffers corruption resulting in decoded data errors.

The increase in RSSI (P2-P1) exceeds the predetermined threshold value and on detecting this condition the demodulator restart module 24 generates the restart event 60 shortly after T2S'. The restart event 60 may be a logic pulse, a logical transition between logic 0 and logic 1 or a logical transition between logic 1 and logic 0. Note that the restart event 60 is generated before the end of the acquisition period of the second transmission (T2D').

The demodulator 18 restarts the signal acquisition process as a result of receiving the restart event 60 and is able to capture the start of the second transmission before the end of its acquisition period at time T2D'. The restart event 60 may be output to the external system so that any appropriate action as a result of the aborted reception of the first transmitted packet may be performed as required. For example, the restart event may be used to reset system logic such as a packet formatter so that it will correctly assemble the subsequent received bits of the second transmission into formatted data fields which may include a frame control field, a sequence number, addressing fields, and payload data. The number of restart events occurring may also be logged for network diagnostics and adaptive routing algorithms.

At time T2D', the demodulator 18 may successfully acquire the start of the second transmission and assert the decoding status indication by changing the decoding status output 20 from logic 0 to logic 1.

At time T1E', the transmission from first transmitter 40' completes but this is now immaterial to the receiver because the demodulator 18 is decoding the transmission from the second transmitter 50' and expects it to end at time T2E'.

At time T2E', the decoding is completed by the demodulator18 based upon the known packet length of the second transmission from second transmitter 50'. The known packet length may be obtained during or shortly after the acquisition process performed for the second transmission, or known a priori by the system. The second packet from the second transmitter 50' may be received without errors, even though it collided with the first transmitted packet from the first transmitter 40', because it was sufficiently stronger in power than the first packet at the receiver. This is an improvement over the known RF receiver 100 in the same scenario where neither transmission was successfully received.

Note that if the second transmission is sufficiently weaker than the first transmission as perceived by the receiver 400, then the overlapping signals may not result in a restart event and the first transmitted packet may be received without data errors and so behaves in the same way as RF receiver 100. If the second transmission is only marginally stronger than the first transmission, so that the increase in signal power as perceived by the receiver 400 is less than the threshold, then the overlapping signals may not result in a restart event and the first transmitted packet may be received with data error so would behave in the same way as RF receiver 100.

The threshold should be set appropriately high enough to avoid false restarts from occurring due to signal fading characteristics, but not too high as to prevent the overlapping signal condition from being detected and acted upon.

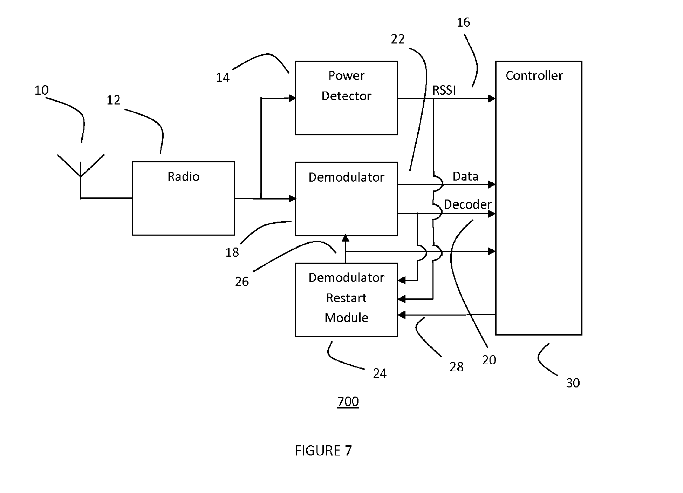

Figure 7 shows an RF receiver 700 according to an embodiment. An antenna 10 may be connected to a radio 12. The radio 12 may convert a received RF signal to a lower intermediate or baseband frequency. The output of radio 12 may be connected to a power detector 14, and a demodulator 18. During operation, the power detector 14 may periodically measures the signal power and provides a RSSI value on RSSI output 16 to demodulator restart module 24. The demodulator 18 may decode and output the received baseband signal as binary digits or symbols on data output 22. The demodulator 18 may output a signal on decoding output status 20 to indicate when it is actively decoding and when the decoded data output on data output 22 is valid. The decoding output status 20 may be connected to demodulator restart module 24. The demodulator restart module 24 has a threshold input 28. The demodulator restart module output 26 may be connected to demodulator 18. Controller 30 may be connected to RSSI output 16, data output 22, decoding status output 20, and the demodulator restart module output 26. Controller 30 may be connected to the threshold input 28 of the demodulator restart module 24.

During operation of the RF receiver 700, the demodulator restart module 24 may monitor the RSSI output 16 when decoding is active as indicated by decoding output status 20. The controller 30 may set a threshold value on threshold input 28 dependent on the value of RSSI output 16. If the increase in RSSI value relative to a previous RSSI level exceeds a threshold value on threshold input 28, demodulator restart module 24 may generate a restart signal or restart event on demodulator restart module output 26. The restart signal may cause the in-progress decoding process to be aborted and the signal acquisition and decoding process to restart in the demodulator 18. The controller may use the restart event to trigger other sequences in the system. Other sequences may for example involve resetting the system and discarding previously decoded data packets even if correct.

Embodiments of the RF receiver may omit the antenna which may be external to the RF receiver. Embodiments of the RF receiver may be included in a microcontroller together with a transmitter. A device including embodiments of the RF receiver may be configured to operate in conformance with the IEEE 802.15.4 standard. Wireless networks may include two or more embodiments of the RF receiver and may have more than two transmitters.

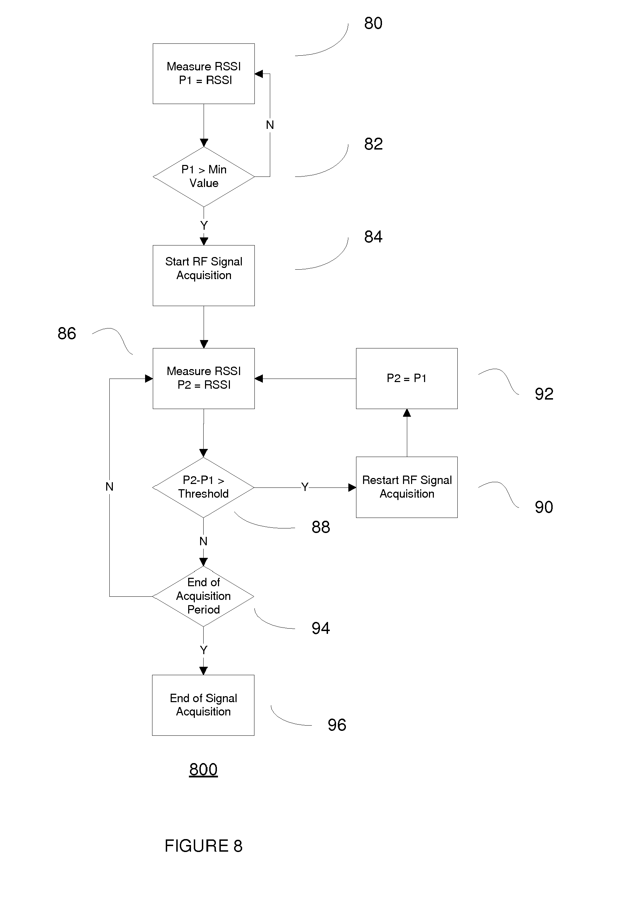

A method of operating a RF receiver 800 for RF signal acquisition in accordance with an embodiment is shown in Figure 8. A first RSSI value P1 is periodically measured in step 80. In step 82, P1 may be compared with a minimum value below which no signal transmission is assumed. In step 84, a comparison is made between the measured RSSI value P1 and a minimum signal strength value. If P1 is greater than the minimum signal strength value then a valid RF signal is presumed and RF signal acquisition commences.. RF signal acquisition may include demodulation and decoding an RF signal. While RF signal acquisition is continuing, a further RSS measurement value P2 may be taken in step 86. The difference between P2 and P1 is calculated and compared with a predetermined threshold value in step 88. Following the comparison at step 88, if P2-P1 is less than or equal to the threshold value, then a check for the end of the signal acquisition period is made in step 94. The end of the signal acquisition period may be determined by the length of the data packet. If it is not the end of the signal acquisition period then the method returns to step 86 where a further RSSI measurement is sampled and the cycle is repeated. If it is the end of the signal acquisition period then at step 96 signal acquisition may stop. Following the comparison at step 88, if P2-P1 is greater than the threshold value then RF signal acquisition is restarted in step 90. RSSI value P2 replaces P1 in step 92. The method then returns to step 86 to measure the RSSI value and the cycle continues. Embodiments may return to step 80 after the end of signal acquisition in step 96 to start RF signal acquisition normally.

Embodiments may be implemented in software running on a microcontroller, hardware, or a mixture of software and hardware. In embodiments, the predetermined threshold value may correspond to an increase in signal power between 3dB and 12dB. In embodiments the predetermined threshold value may be programmable in steps of 1dB.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A radio frequency receiver (400) comprising:
a power detector (14) for providing a plurality of received signal strength indication values (16) of a received RF signal,
a demodulator (18) for demodulating and decoding the received RF signal,
a restart module (24) coupled to the power detector and the demodulator for generating a restart event; wherein
the restart module is operable to receive received signal strength indication values from the power detector during demodulation of the received RF signal from a first transmitter and to generate a restart event to restart the demodulator to demodulate and decode the received RF signal from a further transmitter in response to an increase of the received signal strength by a value which exceeds a predetermined threshold value.

2. The radio frequency receiver of claim 1 wherein the demodulator is operable to restart signal acquisition in response to a restart event generated by the restart module.

3. The radio frequency receiver of any preceding claim wherein the demodulator further comprises a data output (22) for the decoded data and a decoding status output (20) for indicating when the demodulator is decoding a data packet and wherein
the decoding status output is coupled to an input of the restart module and the restart module is operable to generate a restart event only when the decoder is decoding a data packet.

4. The radio frequency receiver of any preceding claim wherein the restart module further comprises a threshold input (28) and the radio frequency receiver further comprises a controller (30) coupled to the threshold input and wherein the controller is operable to provide a predetermined threshold value to the restart module.

5. The radio frequency receiver according to claim 4 wherein the controller further comprises an RSSI input coupled to the output of the power detector and wherein the controller is operable to adapt the predetermined threshold value in response to the received signal strength indication values.

6. The radio frequency receiver according to claim 4 or 5 wherein the controller further comprises a restart input coupled to a restart output of the restart module and wherein the controller is operable to reset the system logic in response to a restart event.

7. The radio frequency receiver according to claim 4 wherein the controller further comprises an received signal strength indication input coupled to the output of the power detector and wherein the controller is operable to adapt the predetermined threshold value in response to the received signal strength indication values.

8. The radio frequency receiver according to any preceding claim wherein the restart module is operable to receive a first received signal strength indication value (P1) at a first time (T1S) and a further higher received signal strength indication value (P2) at a second time (T2S) and wherein the restart module is operable to generate a restart event in response to the difference between the further received signal strength indication value and the first received signal strength indication value exceeding a predetermined threshold.

9. The radio frequency receiver according to any preceding claim wherein the predetermined threshold value has a range of values corresponding to a received signal strength increase in the range of 3dB to 12dB.

10. The radio frequency receiver according to any preceding claim configured to operate in accordance with IEEE 802.15.4 standard.

11. A microcontroller comprising the radio frequency receiver according to any preceding claim.

12. A wireless network comprising a first transmitter (40'), a further transmitter (50') and the RF receiver of any of claims 1 to 10, wherein the first transmitter and the further transmitter transmit RF signals at the same frequency.

13. A lighting network comprising the wireless network of claim 12.

14. A building automation system comprising the wireless network of claim 12.

15. A method of receiving a radio frequency signal (800), the method comprising the steps of:
determining a first received strength signal indication value (80),
determining a further received strength signal indication value (86) during demodulation of a received RF signal from a first transmitter, and
restarting the demodulator (90) to demodulate a received RF signal from a further transmitter in response to the difference between the further received strength signal indication value and the first received strength signal indication value exceeding a predetermined threshold value (88).
